# EUROPEAN PATENT APPLICATION

(11) **EP 1 947 819 A1**
(43) Date of publication of application: **23.07.2008**
(21) Application number: 07001052.5
(22) Date of filing: 18.01.2007
(51) Int. Cl.: H04L 29/06, H04L 12/56

(54) **Header reduction of data packets by route optimization procedure**

(71) Applicant: MATSUSHITA ELECTRIC INDUSTRIAL CO., LTD., Osaka 571-8501 (JP)
(72) Inventor: Velev, Genadi, 63225 Langen (DE); Bachmann, Jens, 63225 Langen (DE); Hakenberg, Rolf, 63225 Langen (DE)
(74) Representative: Grünecker, Kinkeldey, Stockmair & Schwanhäusser Anwaltssozietät

(57) **Abstract**

The invention relates to a method for reducing the header size of data packets exchanged between a Mobile Node and its Home Agent. Different sort of headers are utilized between a Correspondent Node and the MN's HA, and between the MN and its HA. The sort of header used between the MN and its HA allows to reduce the header size of exchanged packets on said data path section, as only one header is necessary, compared to the necessity of two headers of the previous sort, used between the CN and the HA. To achieve this, a modified route optimization procedure is performed between the MN and its HA, wherein the HA participates in the RO on behalf of the CN. Thus, the RO remains transparent for the CN, while the MN thinks normal RO is happening. The invention also relates to several network entities that participate in the method.

## Description

### FIELD OF THE INVENTION

The invention relates to a method for reducing the header size of data packets by utilizing route-optimized and non-route-optimized headers for the data packets, that are exchanged between a mobile node and a correspondent node. The invention mainly applies to communication between a MN and a CN, wherein an intermediate node in the communication applies additional encapsulation of data packets, thereby increasing the data traffic. In particular, the route-optimized and non-route-optimized headers are established by performing a route-optimization procedure between the mobile node and the intermediate node, acting on behalf of the correspondent node. Furthermore, the invention relates to a network entity and a network control entity, that participate in the invention.

### TECHNICAL BACKGROUND

Communications systems evolve more and more towards an Internet Protocol (IP)-based network. They typically consist of many interconnected networks, in which speech and data is transmitted from one terminal to another terminal in pieces, so-called packets. IP packets are routed to the destination by routers in a connection-less manner. Therefore, packets comprise IP header and payload information, whereby the header comprises among other things source and destination IP address.

For scalability reasons, an IP network uses a hierarchical addressing scheme. Hence, an IP address does not only identify the corresponding terminal, but additionally contains location information about this terminal. With additional information provided by routing protocols, routers in the network are able to identify the next router towards a specific destination.

In particular, a process referred to as routing is used to move data packets from a source to a destination over at least one intermediate network. In order for the data packet to reach the destination, the data packet needs to be handed off from one router to another, until it gets to the physical network of the destination device. This is also referred to as next-hop routing, since the routing is based on a step-by-step basis, that is, the exact path between the source and the destination is not known at the beginning, but each intermediate router knows the next-hop router to which to forward the data packet. The main advantage achieved by this is that each router only needs to know which neighboring router should be the next recipient for a given data packet, rather than knowing the exact route to every destination network.

Exemplary, after the source device sends a packet to its local router, the data link layer of the local router passes it up to the router's IP layer. Correspondingly, after removing the layer 2 frame, the layer 3 header of the packet is examined, and the router decides to which next router the packet is to be sent. Consequently, the packet is re-encapsulated in an appropriate layer 2 frame and is passed back down to the data link layer, which sends it over one of the router's physical network links to the determined next router.

In this respect, a router maintains a set of information, called routing table, that provides a mapping between different network IDs and the other routers to which it is connected. Correspondingly, the router checks the destination IP address of a data packet against the routing table entries to determine the next-hop router, based on the longest match of the destination address with an entry of the routing table. In addition, a metric value defined for each routing table entry allows to rate, based on certain criteria, particular routing entries, and thus to select among several possible paths the best path.

The routing tables are thus relevant for an efficient provision of data and may be configured manually by an operator, or dynamically. A manual setting of static routes is only feasible for smaller networks, whereas in the common internet, which changes constantly, mainly dynamic routing tables are applied. The automatic construction of routing tables is managed and updated by routing protocols, involving a series of periodic or on-demand messages containing routing information that is exchanged between routers.

The network layer 3 (OSI) is the layer where the routing of packets actually takes place, wherein the layer 3 header of a data packet is not changed while routed through intermediate networks. As higher layers of a source and a destination are only "logically" connected, that is, there is no real connectivity, it is necessary for the packets to traverse the lower layers 2 and 1 to get physically delivered to the destination. Since different protocols are used in each network layer, each data packet passed from e.g. layer 3 to layer 2 has to be appropriately framed.

Accordingly, encapsulation of data packets is usually used to transmit data from an upper layer protocol via a lower layer protocol. For instance, the internet utilizes the IPv6 protocol, while most applications use either the User Data Protocol (UDP) or the Transmission Control Protocol (TCP) for data. Consequently, user data is encapsulated in a UDP datagram (layer 4), which is then encapsulated in an IP packet (layer 3). Sequentially, the IP packet, along with the encapsulated user data, may then be transmitted over the data link layer protocol (e.g. Ethernet, layer 2), which again entails an encapsulation.

Furthermore, encapsulation may also be used within a same layer in case one protocol of a particular layer is used for transporting a data packet encapsulated by another protocol of the same particular layer. A logical construct called a tunnel is established between the device that encapsulates and the device that decapsulates, wherein the process itself is referred to as tunneling. The tunneling may be used for transmitting data packets of one network protocol through a network (controlled by a different protocol) which would otherwise not support it. Tunneling may also be used to provide various types of Virtual Private Network (VPN) functionalities such as private addressing. For instance, there is the GPRS Tunnelling Protocol (GTP), the Point-to-Point Tunneling Protocol (PPTP) or the IP security Protocol (IPsec).

One of the most commonly used tunneling mechanism is the IP(layer 3)-in-IP(layer 3) encapsulation, which refers to the process of encapsulating an IP-datagram with another IP header and may be used e.g. for Mobile IP. Mobile IPv6 - also denoted MIPv6 - (see D. Johnson, C. Perkins, J. Arkko, "Mobility Support in IPv6", IETF RFC 3775, June 2004, available at http://www.ietf.org and incorporated herein by reference) is an IP-based mobility protocol that enables mobile nodes to move between subnets in a manner transparent for higher layers and applications, i.e. without breaking higher-layer connections. In other words, the mobile nodes remain reachable while moving around in the IPv6 internet network.

Usually, when a terminal powers on, it configures an IP address that is based on the IP address prefix of the access network. If a terminal is mobile, a so-called mobile node (MN), and moves between subnets with different IP prefix addresses, it must change its IP address to a topological correct address due to the hierarchical addressing scheme. However, since connections on higher-layers such as TCP connections are defined with the IP addresses (and ports) of the communicating nodes, the connection to the active IP sessions breaks if one of the nodes changes its IP address, e.g. due to movement. One possible protocol to address said problem is the MIPv6 protocol.

The main principle of MIPv6 is that a mobile node is always identified by its Home Address (HoA), regardless of its topological location in the internet, while a Care-of Address (CoA) of the mobile node provides information about the current topological location of the mobile node.

In more detail, a mobile node has two IP addresses configured: a Care-of Address and a Home Address. The mobile node's higher layers use the Home Address for communication with the communication partner (destination terminal), from now on mainly called Correspondent Node (CN). This address does not change and serves the purpose of identification of the mobile node. Topologically, it belongs to the Home Network (HN) of the mobile node. In contrast, the Care-of Address changes on every movement resulting in a subnet change and is used as the locator for the routing infrastructure. Topologically, it belongs to the network the mobile node is currently visiting. One out of a set of Home Agents (HA) located on the home link maintains a mapping of the mobile node's Care-of Address to the mobile node's Home Address and redirects incoming traffic for the mobile node to its current location. Reasons for deploying a set of home agents instead of a single home agent may be e.g. redundancy and load balancing.

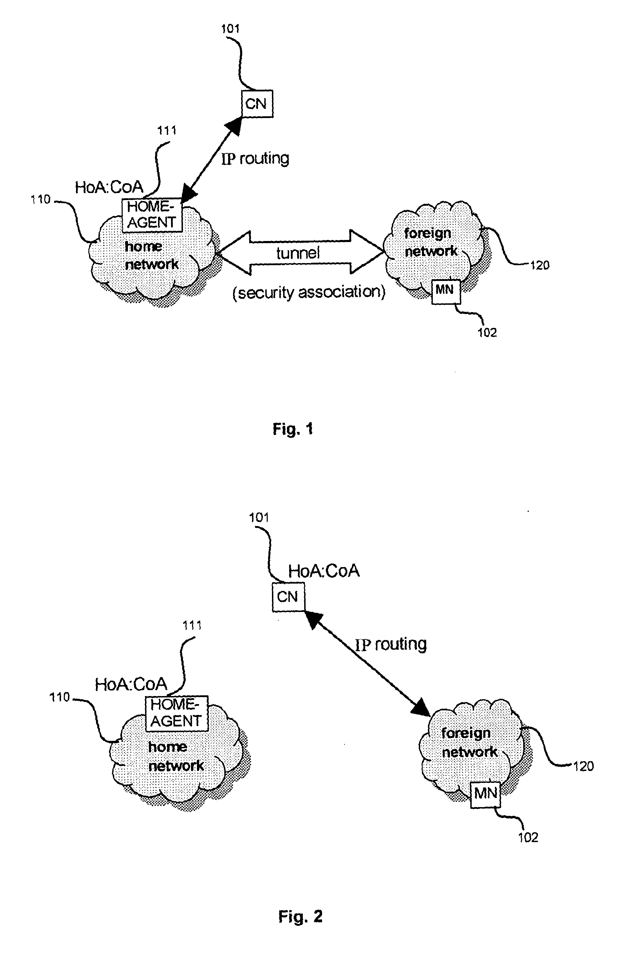

Mobile IPv6 currently defines two modes of operation, one of which is bi-directional tunneling (Fig. 1). The other mode is the route optimization mode (Fig. 2), which will be discussed later. In using bi-directional tunneling, data packets sent by the correspondent node 101 and addressed to the home address of the mobile node 102 are intercepted by the home agent 111 in the home network 110. IP-in-IP encapsulation is required because each data packet that is intercepted needs to be resent over the network to the Care-of Address of the MN 102. Accordingly, each intercepted data packet is included as the payload in a new IP data packet addressed to the CoA of the MN 102 and tunneled to the MN 102, which is located at the foreign network 120. The start of the corresponding tunnel is the Home Agent 111, which does the encapsulation and the end is the mobile node 102. It might also be possible that a local agent in the foreign network 120 receives messages on behalf of the mobile node, strips off the outer IP header and delivers the decapsulated data packet to the mobile node (not shown).

Data packets sent by the mobile node 102 are reverse tunneled to the home agent 111, which decapsulates the packets and sends them to the correspondent node 101. Reverse tunneling means that packets are tunneled by the mobile node to the home agent in a "reverse" manner to the "forward" tunnel.
Regarding this operation in MIPv6 only the Home Agent 111 is informed about the Care-of Address of the mobile node 102. Therefore, the mobile node sends Binding Update (BU) messages to the Home Agent. These messages are advantageously sent over an IPsec security association, and are thus authenticated and integrity protected.

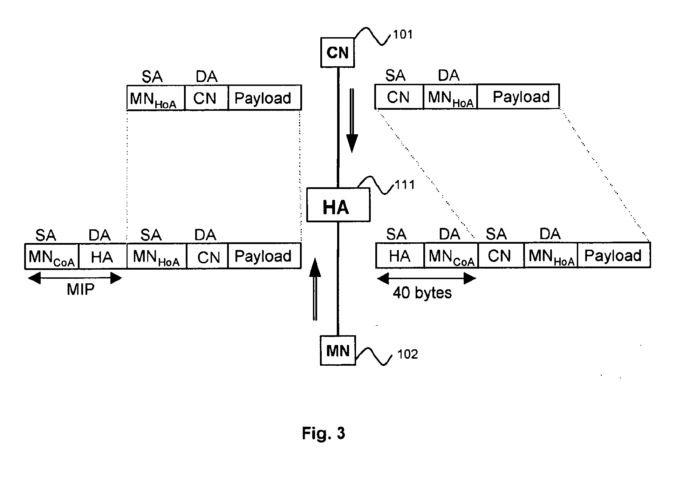

Fig. 3 shows a diagram of an exemplary data packet exchange between a CN 101 and a MN 102 via the Home Agent 111 of the MN 102, wherein the packet format during the communication is illustrated in detail. It is assumed that all communication between the CN and the MN is conducted via the MN's HA 111, that is, no route optimizationhas been performed. Consequently, the IP header of a data packet transmitted from the CN to the MN contains the Home Address of the MN as destination address, and the IP address of the CN as the source address. In accordance with the destination address of the packet being the Home Address of the MN, the data packet is routed to the Home Network, and then to the Home Agent of the MN.

As explained above, upon receiving the data packet, the HA applies the IP-in-IP encapsulation based on MIPv6 procedures and sends the encapsulated packet to the MN. In other words, the HA tunnels the received data packets to the MN by applying the IP-in-IP encapsulation. More specifically, the HA adds another IP header to the packet, comprising its own address as the source address, and the Care-of Address of the MN as the destination address of the additional header. As apparent from Fig. 3 this augments the packet size with another 40 bytes.

Similarly, data packets that are returned by the MN are encapsulated with two IP headers. The outer header relates to the tunneling of the data packet to the HA, and accordingly includes the address of the HA as the destination address, and the Care-of Address of the MN as the source address. The inner IP header includes the CN's address as the destination, and the MN's Home Address as the source address.

Therefore, each data packet of a communication session between a MN and a CN is augmented between the HA and the MN, this resulting in additional traffic in the corresponding network. This is especially disadvantageous in networks with limited data bandwidth capabilities, e.g. wireless networks.

### SUMMARY OF THE INVENTION

Therefore, in view of the above problems in the state of the art, one object of the invention is to improve the exchange of data packets between a mobile node and a an intermediate node, in communication with a correspondent node.

More specifically, one object of the invention is to reduce the IP header size of data packets exchanged between a mobile node and an intermediate node, in communication with a correspondent node.

The object is solved by the subject matter of the independent claims. Advantageous embodiments of the invention are subject-matters of the dependent claims.

One aspect of the invention is to reduce the IP header size of data packets by applying two different sort of headers on certain data path sections. In particular, between the correspondent node and the intermediate node a non-route-optimized IP header is used. Then, between the intermediate node and the mobile node a route-optimized IP header is used, which allows to reduce the header size as only one route-optimized IP header is necessary on said route section, compared to the two non-route-optimized IP headers that would otherwise be required.

Accordingly, another aspect of the invention relates to applying a route optimization procedure for establishing the different types of IP header. In particular, the intermediate node acts as the correspondent node and participates in the route optimization procedure, so that the correspondent node is not aware of the route optimization taking place. Consequently, the CN still uses non-route-optimized IP headers to transmit data, while between the intermediate node and the MN route-optimized IP headers are applied to the exchanged data packets.

One embodiment of the invention provides a method for reducing the header size of data packets on a communication link between a mobile node and its home agent. The data packets are exchanged between the mobile node and a corresponding node and all the data packets are exchanged via the home agent. The mobile node transmits data packets to the correspondent node by utilizing a route-optimized header, while the correspondent node transmits data packets to the mobile node by utilizing a non-route-optimized header. Then, the home agent converts the route-optimized header of the data packets from the mobile node into the non-route-optimized header, utilized by the correspondent node. Further, the home agent converts the non-route-optimized header of the data packets from the correspondent node into the route-optimized header, utilized by the mobile node.

In an advantageous embodiment of the invention a route optimization procedure is performed between the mobile node and the home agent. In particular, the home agent participates in the route optimization procedure on behalf of the correspondent node. Also, the above steps are conducted after performing the route optimization procedure. The use of already existing procedures facilitates the implementation of the invention, as no entire new protocols are to be develop for this purpose.

According to a further embodiment, the above route optimization procedure between the mobile node and the home agent comprises the exchange of authorisation messages between the mobile node and the home agent. The authorisation messages, received by the home agent from the mobile node, are destined for the correspondent node. Furthermore, the home agent utilizes an address of the correspondent node as a source address of the authorisation messages, transmitted to the mobile node. The authorization messages enhance the security of the whole route optimization procedure.

Another embodiment of the invention relates to the exchange of authorisation messages. In particular, the mobile node transmits a first and second authorisation message destined for the correspondent node. However, the first and second authorisation messages are intercepted by the home agent. Then, in response to the first and second authorisation message, the home agent transmits a third and fourth authorisation message to the mobile node. In more detail, the address of the correspondent node is utilized as a source address of the third and fourth authorisation message. The correspondent node does not find out about the route optimization procedure, as the corresponding messages are intercepted by the home agent.

In an additional embodiment of the invention the mobile node transmits a binding update message, that is destined for the correspondent node. The purpose of the binding message is to bind a location-dependent address of the mobile node with a location-independent address of the mobile node. Again, the binding update message is intercepted by the home agent.

According to an advantageous embodiment of the invention, the mobile node is located in an access network and an access router in the access network provides connectivity to the access network for the mobile node. In said case, the access router forwards messages of a route optimization procedure to the home agent, wherein the messages are destined to the corresponding node. Moreover, the route optimization procedure is performed between the mobile node and the home agent, whereas the home agent participates in the route optimization procedure on behalf of the correspondent node. The access router also helps to leave the correspondent node out of the route optimization procedure by transmitting related messages destined to the correspondent node to the home agent instead.

In another embodiment of the invention, the data packets are exchanged between the mobile node and the access router through a security tunnel. This enhances the security on said link.

A different embodiment of the invention relates to the possibility that the access router removes an option field from the header of data packets received from the mobile node, before tunnelling the data packets to the home agent. Thereby, the access router also helps to reduce the header size of data packets.

According to a further embodiment of the invention, the access network is a wireless or a wired type of access network. This embodiment of the invention may be applied to both types of networks and is thus advantageous.

In another advantageous embodiment of the invention, the non-route-optimized header of the data packets transmitted from the correspondent node, comprises an address of the correspondent node in a source address field. In addition, they further contain a location-independent address of the mobile node in a destination address field. On the other hand, the route-optimized header of the data packets transmitted from the mobile node comprises a location-dependent address of the mobile node in a source address field. Further, they also comprise the address of the correspondent node in a destination address field and the location-independent address of the mobile node in a routing header field.

In a more specific embodiment of the invention the conversion of the route-optimized header of the data packets from the mobile node into the non-route-optimized header comprises the exchange of the location-dependent address of the mobile node in the source address field with the location-independent address of the mobile node in the routing header field. It further includes the deletion of the routing header field. This allows to hide the performed route optimization from the correspondent node as the header of each data packet is changed to the header used before the route optimization procedure and expected by the correspondent node.

According to a further embodiment of the invention, the conversion of the non-route-optimized header of the data packets from the correspondent node into the route-optimized header comprises the inclusion of the location-independent address of the mobile node in the routing header field. In addition, the location-independent address of the mobile node in the destination address field is exchanged with the location-dependent address of the mobile node. Conversely to before, the mobile node is made to believe that the route optimization procedure was performed with the correspondent node.

Another embodiment of the invention relates to the option that the mobile node is located in a first network area and the correspondent node is located in a second network area, wherein the first and the second network area use different access technologies. The flexibility for implementing the embodiment of the invention is enhanced, because there is no restriction to access technologies.

One embodiment of the invention provides a network entity for reducing the header size of data packets. The data packets are exchanged between a mobile node and a corresponding node and all the data packets are exchanged via the network entity. A receiver of the network entity receives data packets incoming from the mobile node, wherein the data packets incoming from the mobile node comprise a route-optimized header. The receiver further receives data packets incoming from the correspondent node, wherein the data packets incoming from the correspondent node comprise a non-route-optimized header. A processor in the network entity then converts the route-optimized header of the data packets, incoming from the mobile node, into the non-route-optimized header. Accordingly, the processor further converts the non-route-optimized header of the data packets, incoming from the correspondent node, into the route-optimized header.

According to another embodiment of the invention, the receiver of the network entity receives from the mobile node a first and second authorisation message, destined to the correspondent node. The processor generates, in response to the first and second authorisation message, a third and fourth authorisation message for the mobile node. In detail, the processor utilizes an address of the correspondent node as source address of the third and fourth authorisation message. Subsequently, the transmitter of the network entity transmits the third and fourth authorisation messages to the mobile node. Thereby, the network entity is enabled to perform in the route optimization procedure on behalf of the correspondent node. In another embodiment of the invention the receiver receives data packets from the mobile node. In addition, the route-optimized header of the data packets from the mobile node comprises a location-dependent address of the mobile node in the source address field. The route-optimized header of the data packets further include an address of the correspondent node in the destination field and a location-independent address of the mobile node in a routing header field. The processor of the network entity exchanges the location-dependent address of the mobile node in the source address field with the location-independent address of the mobile node in the routing header field. Furthermore, the processor deletes the routing header field. Then, the transmitter of the network entity transmits the data packets to the correspondent node, after having exchanged the location-dependent address with the location-independent address of the mobile node and after having deleted the routing header field.Another embodiment concerning the network relates to the receiver receiving data packets from the correspondent node. In said case, the non-route-optimized header of the data packets from the correspondent node comprises an address of the correspondent node in the source address field and a location-independent address of the mobile node in the destination address field. The processor of the network entity includes the location-independent address of the mobile node in the routing header field. Furthermore, the processor exchanges the location-dependent address of the mobile node in the destination address field with the location-dependent address of the mobile node. Then, the transmitter transmits the data packets to the mobile node, after having included the location-independent address and after having exchanged the location-dependent address of the mobile node.

One embodiment of the invention provides an access router in a network area to which a mobile node is connected for forwarding data packets received from the mobile node. The mobile node exchanges the data packets with a correspondent node via an home agent, and all the data packets are exchanged between the home agent and the mobile node via the access router. A processor in the access router determines whether a data packet incoming from the mobile node is related to a route optimization procedure, performed between the mobile node and the home agent. The home agent participates in the route optimization procedure on behalf of the correspondent node. In case the processor determines that the data packet incoming from the mobile node is related to the route optimization procedure, a transmitter transmits the data packet to the home agent.

Further, in another embodiment of the invention a plurality of home agents are connected to the access router. A database in the access router comprises information about an association of the mobile node with the home agent via which the data packets are exchanged with the correspondent node. Then, the processor of the access router determines for each data packet, incoming from the mobile node, the home agent via which the data packets are exchanged with the correspondent node. This determination is based on the database and on an address of the mobile node in a source address field of the data packet.

One embodiment of the invention provides a mobile node which exchanges data packets with a correspondent node via an home agent. The mobile node is located in a foreign network different to its home network and is adapted to perform a route optimization procedure with the home agent upon changing to another foreign network. Furthermore, the home agent participates in the route optimization procedure on behalf of the correspondent node.

### BRIEF DESCRIPTION OF THE FIGURES

In the following the invention is described in more detail in reference to the attached figures and drawings. Similar or corresponding details in the figures are marked with the same reference numerals.
- **Fig. 1**: exemplifies the use of bi-directional tunneling for a communication between a mobile node and a correspondent node according to MIPv6,
- **Fig. 2**: exemplifies the use of route optimization for a communication between a mobile node and a correspondent node according to MIPv6,
- **Fig. 3**: shows the data packet formats used during communication between a MN and a CN, when in bidirectional tunneling mode of MIPv6,
- **Fig. 4**: illustrates the data packet formats used during communication between a MN and a CN, before and after performing one embodiment of the invention,
- **Fig. 5**: illustrates a signaling diagram for a route optimization procedure according to MIPv6 between the MN and the CN, and the packet formats of related messages,
- **Fig. 6**: shows an illustration that confronts the respective data packet formats used for MIPv6 bidirectional tunneling mode and MIPv6 route optimization mode,
- **Fig. 7**: shows a signaling diagram for a route optimization procedure according to one embodiment of the invention between the MN and the HA, and the data packet formats of related messages,
- **Fig. 8**: depicts an overview of a simplified WLAN network model,
- **Fig. 9**: illustrates a interworking 3GPP-WLAN protocol stack and a data packet format used for communication,
- **Fig. 10**: illustrates the data packet formats used during communication when the MN is located in an WLAN scenario,
- **Fig. 11**: shows a signal diagram for a route optimization procedure according to another embodiment of the invention, and the data packet formats of related messages, and
- **Fig. 12**: illustrates the data packet formats used during communication between a MN and a CN, before and after performing the embodiment of the invention, in case the MN is located in a WLAN.

### DETAILED DESCRIPTION OF THE INVENTION

The following paragraphs will describe various embodiments of the invention. For exemplary purposes only, most of the embodiments are outlined in relation to a 3GPP-WLAN communication system according to the discussion in the Background Art section above and later on. It should be noted that the invention may be advantageously used for example in connection with a mobile communication system such as the 3GPP-WLAN communication system, but the invention is not limited to its use in this particular exemplary communication network.

The explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures/systems described in the Technological Background section and may in some embodiments of the invention also make use of standard and improved procedures of theses architectures/systems.

### Definitions

In the following a definition of several terms frequently used in this document will be provided.

A mobile node is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes.

A home network (i.e., the home link) of a mobile node is typically identified by the location of the home agent at which the mobile node registers its care-of address(es) for a given home address of the mobile node. A home address is an address assigned to a mobile node, used as the permanent address of the mobile node, and therefore location independent. This address has the prefix of the mobile node's home network. A care-of address is an address associated with a mobile node while visiting a foreign network, and thus dependent on the location. The prefix of the care-of address is typically equal to the prefix of the visited network. A mobile node may have one or more care-of addresses simultaneously.

A home agent is a router or a functional entity providing a routing function on a mobile node's home network with which the mobile node registers its current care-of address(es). While the mobile node is away from home, the home agent may provide mobility service to the mobile node e.g. by intercepting packets on the home link destined to the mobile node's home address, encapsulating them, and thus tunneling them to one of or a some of the mobile node's registered care-of address(es).

A route-optimized header is a header of a first sort, being different from the type of non-route-optimized header. In one embodiment of the invention these two type of headers are differentiated by whether a route optimization (RO) has been performed previously or not. That is, a route-optimized header type is usually utilized after a RO has been conducted, while a non-route-optimized header type is used in case no RO took place.

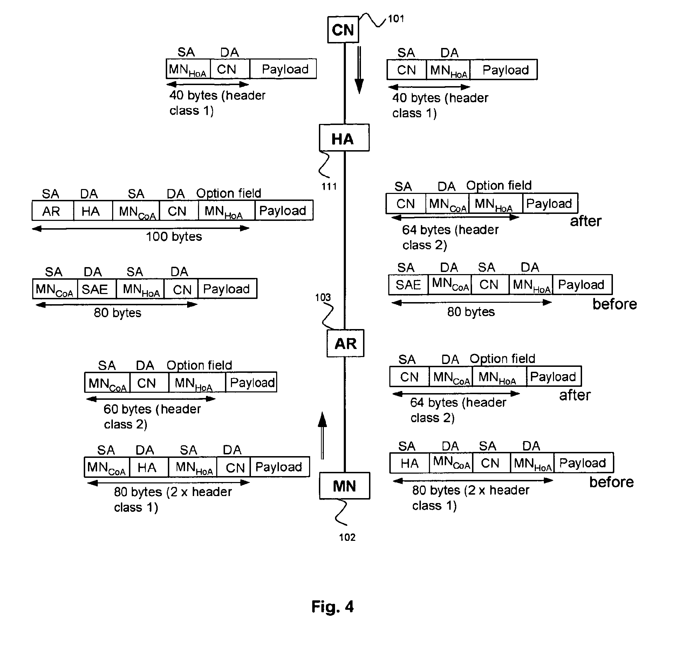

Fig. 4 shows a network architecture to which one embodiment of the invention is applied, along with the corresponding header formats of data packets exchanged between the CN 101 and the MN 102 via the HA 111. An access router (AR) 103 is the default router of the MN in the Access Network to which the MN is currently connected. According to the embodiment of the invention, different IP header classes are applied to data packets on particular data paths. Specifically, Fig. 4 illustrates the differences after applying the embodiment of the invention. Between the HA 111 and the MN 102 a different sort of header (header class 2) is utilized to encapsulate the payload than in the route section between the HA 111 and the CN 101 (header class 1). The header used between HA and MN before applying the invention (as discussed in relation to Fig. 3) is also shown in Fig. 4. Accordingly, the header, before applying the embodiment of the invention, comprises two headers of class 1 which amounts to 80 bytes, 40 bytes each. On the other hand, the class 2 header used in this embodiment requires less space, for instance 60 bytes in the uplink between the AR and the MN, that is, in the MN's access network, while the header of data packets is extended to 100 bytes between the AR and the HA. The additional IP-in-IP encapsulation in the uplink between the AR and the HA is necessary, because the data packets sent out by the MN are destined to the CN's IP address (see DA-field in Fig. 4). Thus, the data packets would be routed by the AR in the direction of the CN. As all data packets must got through the HA it is necessary to apply additional IP-in-IP encapsulation so as to tunnel the data packets to the HA.

Furthermore, in the downlink the header size is reduced to 64 bytes between the HA and the MN. Thereby, the data packet size is respectively reduced by 20 bytes and 16 bytes, compared to before the appliance of the invention. The difference in the size of the class 2 header on the downlink and uplink is based on the different option fields used for downlink and uplink.

The necessary steps for changing the type of header from class 1 into class 2, and vice versa, are conducted by the HA. In particular, when receiving a data packet from the CN with a class 1 header, the HA matches the Home Address of the MN in the destination field of the data packet with a corresponding Care-of Address of the MN in an internal database. Subsequently, upon determining the location-dependent address of the MN, the CoA, the destination address field is changed from the HoA of the MN to the MN's CoA. Additionally, the HoA of the MN is inserted in an appropriate option field of the header, before forwarding the data packet to the MN. The HoA in the option field is needed in the MN so that internally in the MN the packet can be forwarded to the correct application communicating with the CN.
Conversely, when the HA receives a data packet with a class 2 header from the MN, it has to transform the class 2 header into a class 1 header. In this respect, it is first necessary to strip off the additional IP header used for the tunneling from the AR to the HA. Then, the HA interchanges the MN's CoA in the source address field with the MN's HoA, defined in the option field of the class 2 header, and afterwards removes the Option field with the MN's HoA.

It should be noted that the particular location of the MN outside its Home Network is of no importance for the embodiments of the invention. Therefore, the MN may be located in any other different network from its own Home Network. However, the MN has to initialize the Route Optimization according to an embodiment of the invention each time the MN changes its CoA or starts communication with a new CN. When the MN is in the Home Network no IP-in-IP tunneling is necessary, as the packets are locally routed within the network to the MN. Thus, there is no need to reduce the header size as only one IP header is used for the data packets.

To summarize, the CN and the MN use different IP header types to encapsulate their payload, the CN uses a first type of header, which was also used before applying the invention, and the MN uses a second type of header. The class 2 header reduces the size of the data packet, because it is possible to transmit the data packet with only one class 2 header, whereas, when using the class 1 header, it would be necessary to encapsulate the payload with two class 1 headers. As an exception, between the AR and the HA in the uplink and additional IP header is necessary, thus actually increasing the header size to 100 bytes compared to 80 bytes before. However, as this path section is in the core network, which usually has enough bandwidth, as increase in the header size is not so relevant, compared to the reduction in the header size in the MN's network achieved by the embodiments of the invention.

The switching by the HA between the two different header types is necessary as each entity, CN and MN, expects to receive a data packet encapsulated with the sort of header it uses itself. That is, CN expects to receive a data packet with a class 1 header, otherwise the CN would not recognize said packet as belonging to the communication with the MN, because the IP address (i.e. MN's CoA) used in the source address field is unknown to it. Accordingly, the MN requires to receive a header of class 2, as it also uses the class 2 header to encapsulate the data packets for the communication with the CN.

Advantageously, the invention suggests to use already known mechanism to achieve the use of different headers classes by the CN and the MN, as just discussed. In this respect, e.g. a route optimization procedure of the MIPv6 protocol may be used. One advantage achieved thereby is that the MN has not to be modified, as corresponding functionality for performing standard procedures (i.e. Route Optimization according to MIPv6) is assumed to be comprised in every MN by standard.

As already mentioned in the Background section, the MIPv6 supports another mode of operation besides the bidirectional tunneling mode: the route optimized mode (see Fig. 2). The route optimization mode is used to prevent the inefficiency, in relation to the data path length, of the bi-directional tunneling mode by utilizing the direct path between correspondent node and mobile node. When using route optimization, the mobile node sends binding update messages to the correspondent node, which then is able to directly send data packets to the mobile node. Of course, the correspondent node has to implement Mobile IPv6 route optimization support.

More specifically, in order to perform route optimization, the mobile nodes and correspondent nodes exchange signaling messages, being part of the Mobility Header protocol, which is an extension header used by mobile nodes, correspondent nodes and home agents in all messaging related to the creation and management of bindings. With respect to route optimization, 4 message types are specified in the mobility header protocol.

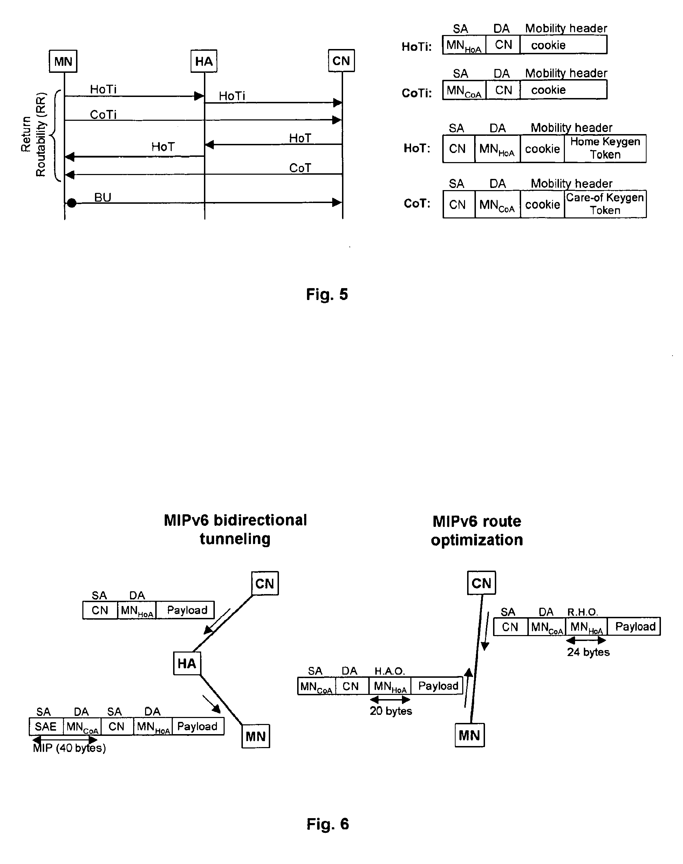

Fig. 5 depicts the signaling flow performed for RO in MIPv6, and the packet formats of most messages used therein. The protection of Binding Updates sent to correspondent nodes does not require the configuration of security associations or the existence of an authentication infrastructure between the mobile node and correspondent node. Instead, a method called the Return Routability Procedure is used to assure that the right mobile node is sending the message.

The Return Routability Procedure enables the correspondent node to obtain some reasonable assurance that the mobile node is in fact addressable at its claimed Care-of Address as well as at its Home Address. Only with this assurance is the correspondent node able to accept Binding Updates from the mobile node which would then instruct the correspondent node to direct that mobile node's data traffic to its claimed Care-of Address.

This is done by testing whether packets addressed to the two claimed addresses are routed to the mobile node. The mobile node can pass the test only if it is able to supply proof that it received certain data (the "keygen tokens") which the correspondent node sends to those addresses. These data are combined by the mobile node into a binding management key. The integrity and authenticity of the Binding Updates messages to correspondent nodes is protected by using the binding management key.

More specifically, the MN sends two messages to the CN, each however over a different route. One message - Home Test Init (HoTi) message - is sent to the HA over the MIP IP-in-IP tunnel, which in turn forwards the message to the CN. A mobile node sends a Home Test Init message to the correspondent node (via the home agent) to acquire the home keygen token. As apparent from Fig. 5 the message comprises the home init cookie that the CN must return later, and conveys the Home Address of the MN to the CN. The other message - Care-of Test Init (CoTi) - is sent directly to the CN in order to obtain the care-of keygen token. The CoTi message informs the CN about the current Care-of Address of the MN, and comprises the care-of-init cookie.

After receiving the HoTi and CoTi messages, the CN sends two messages back to the MN, again over different routes. The Home Test (HoT) message is sent to the MN's HoA, i.e. to the HA in response to the HoTi message. The HA then sends the message to the MN over the MIPv6 tunnel. Correspondingly, the Care-of Test (CoT) message is sent directly to the MN. Both messages HoT and CoT respectively contain "home keygen token" and "care-of keygen token", respectively along with the home init cookie and the care-of-init cookie received from the previous HoTi and CoTi messages. Both tokens are based on CN's currently active secret key, nonces, and Home or Care-of Address (respectively).

After the HoT and CoT messages arrive at the MN, the MN uses their keygen tokens and generates a binding management key from the tokens received with the HoT and CoT messages. After the mobile node has created the binding management key, it can supply a verifiable Binding Update to the correspondent node. After receiving the Binding Update message, the CN can update its binding cache with the binding of MN's HoA and CoA, and is enabled to transmit data packets directly to the MN.

Thus, MlPv6 allows to optimize the route between the CN and the MN by allowing a mapping in the CN of the HoA and CoA of the MN, so that the both nodes can communicate directly.

In the route optimization mode the MN sends data packets directly to the CN, by using the MN's Care-of Address as the source address, and by including the MN's Home Address in a special IPv6 Destination Option extension header defined for MIPv6. Accordingly, the CN sends data directly to the MN, by using the MN's Care-of Address in the destination address field, and by including the MN's Home Address in a special IPv6 type 2 Routing Header defined for MIPv6.

A comparison between the two modes of operation in MIPv6 concerning the packet headers is shown in Fig. 6. On the left side the IP-in-IP encapsulation applied by the HA is illustrated as discussed already in previous paragraphs. On the right side a route optimized route is used between the CN and the MN, eliminating the detour via the HA and thus avoiding the IP-in-IP encapsulation. Instead, a Routing Header Option (R.H.O.) is inserted by the correspondent node comprising the Home Address of the MN, which denotes the target receiving application address. The R.H.O. contains the MN's IP address (HoA), which is used by the application (e.g. HTTP) to transmit packets to the CN. Therefore, after the MN receives the packets, it can derive to which application in this packet is belonging based on the R.H.O.'s address. In correspondence therewith, the MN transmits data packets directly to the CN, wherein it uses its CoA as source address, and inserts its HoA in a Home Address Option (H.A.O.) field, thereby indicating to the CN which is the sending application address.

The IP headers used in the route optimization mode are smaller in size compared to the IP-in-IP header of the bidirectional tunneling mode. For instance, the R.H.O. field is 24 bytes and the H.A.O. field is 20 bytes in size, whereas the additional IP header used by MIP has 40 bytes. Therefore, it is obvious that apart from optimizing the data route between the MN and the CN, the route optimization procedure is able to significantly reduce the header size of a data packet compared to the non-route optimized mode.

However, one of the drawbacks from inserting routing header options in the data packets is that the traffic in the network of the CN is increased compared to the bidirectional tunneling, as apparent from Fig. 6. Each data packet comprises an additional routing option field, be it H.A.O. with 20 bytes for uplink data packets, or R.H.O. with 24 bytes for downlink data packets. Furthermore, the HA is bypassed during the communication after RO is performed, which may not be allowed for certain appliances and services. For instance, the operator needs to keep control over the entire traffic due to accounting or security reasons, that is, all data needs to be transferred via the HA. Still another disadvantage is that signaling traffic to/from the CN is generated by the actual RO procedure. Furthermore, the CN may derive the MN's physical location as the CoA, within the data packets, is location-dependent, which naturally impacts the MN's location privacy.

An embodiment of the invention leverages the advantage of reducing the packet header size, while avoiding the negative effects entailing usual RO.

In particular, the route optimization procedure of MIPv6, introduced above, is performed between the MN and the MN's HA, wherein the MN's HA participates in the RO procedure on behalf of the CN, as would be usual. That is, the HA intercepts messages for the usual RO procedure, performed between the MN and the CN, and responds correctly on behalf of the CN.

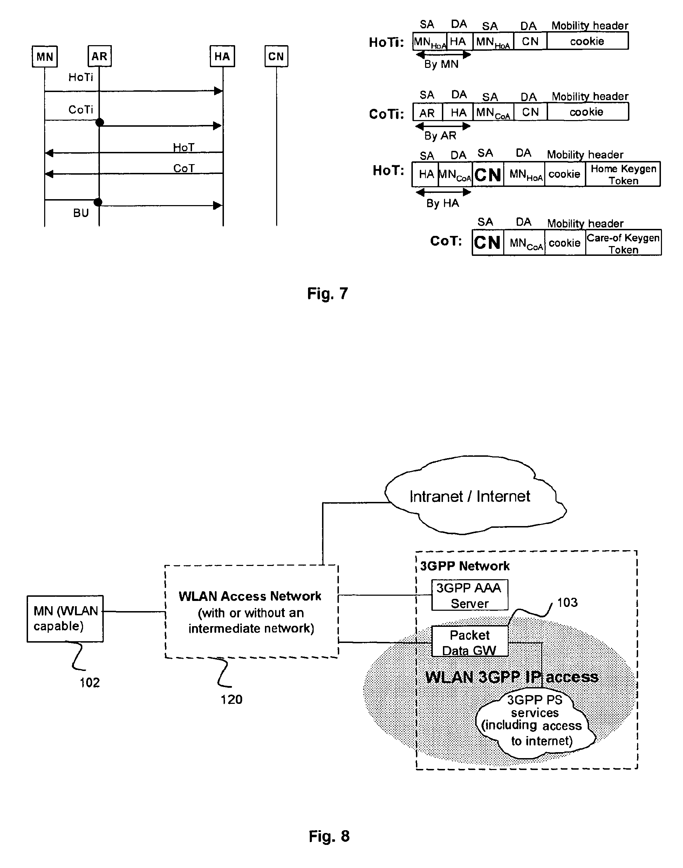

The signaling involved in the RO procedure according to one embodiment of the invention is shown in Fig. 7, along with the message formats used for the inventive RO procedure. After attaching to a foreign network, the MN registers first its new CoA with the HA. Then, the MN may initiate RO with the CN in order to reduce the length of the routing path.

More specifically, the MN starts performing route optimization by generating a HoTi message, that is to be transmitted to the CN via the HA. As illustrated in Fig. 7, the HoTi message includes the CN's address as its destination address, and the MN's HoA as its source address. As shown in Fig. 7, the MN tunnels (IP-in-IP encapsulation) this message to the HA, meaning that the MN encapsulates this message in an additional IP header with the HA's address in the destination address field and its own HoA as source address.

Correspondingly, after the MN generates a CoTi message with its CoA as source address of the CoTi message and the CN's address as CoTi's destination address, the CoTi message is transmitted to the HA. It should be noted that in the usual RO procedure according to MIPv6 the CoTi message is directly transmitted to the CN, without passing through the HA. However, according to the embodiment of the invention, it is necessary for the HA to intercept all messages from the MN relating to the RO procedure. Therefore, the MN's first-hop router (also denoted MN's default router) must recognize when a CoTi message is to be forwarded to the HA instead of directly to the CN, so that the HA is enabled to intercept the CoTi messages as well. In order to achieve this, the default router may decide whether to tunnel the CoTi message to the HA based on the MN's address, i.e. on the CoTi's source address. This would mean that all ROs from a particular MN would go through the HA. The default router can decide to do so during the registration procedure of the MN and/or depending on the MN's subscriber profile.

Accordingly, as the CoTi is to be transmitted to the HA, the access router may for example encapsulate the CoTi message in an additional IP header with the HA's address in the destination header field and its own address as source address of the IP header. Moreover, the default router of the mobile node may vary depending on the type of network, to which the MN is connected, and may be e.g. a NodeB, PDG, access router of WLAN network and any other device serving as default router for the MN in the given access network.

Consequently, the HA receives both messages, HoTi and CoTi, and does not forward same to the CN. Instead, the HA is able to generate appropriate responses, HoT and CoT, thereby acting as the CN to which the HoTi and CoTi messages are directed. The HA includes the CN's IP address as the source address of the response messages, as can be seen in Fig. 7, so as to generate response messages that are identical to the messages that would have been generated by the CN if it would have received the initial HoTi, CoTi messages. The remaining message format of CoT and HoT can be seen in Fig. 7 as well. The HoT message is addressed to the MN's HoA, and the CoT is destined to the CoA of the MN. Accordingly, at least the HoT message is encapsulated by the HA with another IP header (IP-in-IP encapsulation) so as to be tunneled to the MN, wherein the additional header uses the MN's CoA as the destination address. The CoT message is already destined to the location-dependent address, CoA, of the mobile node, so no IP-in-IP encapsulation is necessary.

Resulting from the above, the MN receives the HoT and CoT from the HA and prepares a BU message as specified for a usual RO procedure, entailing the generation of a binding management key, based on the received keygen tokens in the HoT and CoT. The BU is destined for the CN, however it is necessary for the HA to intercept the BU message as the CN is not aware of the RO procedure that is taking place. Correspondingly, the first-hop router in the foreign network of the MN recognizes the BU message and tunnels same to the HA, instead of routing it in the direction of the CN. The HA receives the BU message and creates a binding entry for the MN and the CN, which means that the IP header of data packets incoming from the CN and destined to the MN will be modified from class 1 to class 2; and vice versa for packets incoming from the MN and destined to the CN. In other words, the successful establishment of the MN-CN binding entry in the HA results in the necessary modification of the IP header for every data packet exchanged between the CN and the MN. Thus, the RO procedure is terminated. Please note that the MN-CN binding entry in the HA is different from the MN's HoA-CoA binding cache entry. The first is a result of the modified RO presented in this invention and the latter is a result of the normal MIPv6 procedure.

As a result of the RO procedure in which the MN participated, the MN starts to encapsulate the data packets destined to the CN, with a routing header, composed of a SA, DA and a H.A.O. field. The H.A.O. corresponds to the Option field introduced in relation to Fig. 4, and contains the HoA of the MN. Although the data packets from the MN are destined to the CN (see DA), all data packets have to be transmitted to the HA first, so as to switch the sort of header used, as discussed above. Consequently, the local first-hop router within the local network of the MN, which receives the data packets needs to forward all data packets, received from the MN and destined to the CN, to the HA instead. This may be achieved for example by establishing an IP tunnel between the first-hop router 103 and the HA 111, such that all data packets are encapsulated with a standard IP header addressed to the HA. This is shown via the additional encapsulation (SA: AR, DA: HA) on the left side in Fig. 4.

In a further advantageous embodiment of the invention, the AR may also delete the Option Field from the data packets received from the MN (not shown). Accordingly, upon receiving the data packet, the AR removes the Option Field from the header of each data packet and encapsulates same in an additional IP header so as to tunnel the data packet to the HA. The header size used between the AR and the HA is thus further reduced by 20 bytes to 80 bytes, the same as before performing the RO procedure. Thereby, the disadvantage of needing the IP tunnel between the AR and the HA may be canceled out. Naturally, if no Option Field is used in the header of the data packets received in the HA, there is no need for the HA to delete the Option Field, before forwarding the data packets to the CN.

However, this is only possible in case the MN only uses one HoA registered with the Home Agent, because the HA needs to adapt the header of the received data packets by including the MN's HoA as Source Address into the IP header of each data packet transmitted to the CN. If the MN would have more Home Addresses registered in the HA, the HA would not be able to determine which HoA to include in the header of the data packets. Nevertheless, it should be noted that the MN may have more HoAs registered with other HAs located in other networks. Therefore, the AR needs to know whether it is allowed to remove Option Filed from the data packets header. This may happen through negotiation with the HA.

Conversely, the CN continues to transmit the data packets to the MN in a usual way, as naturally it is not aware of the route optimization procedure that was conducted by the HA instead of itself. Accordingly, the CN still uses the address of the MN's HA as the destination address of the data packets, which are then correctly routed to the HA.

The MN and the CN respectively expect the other communication partner to also encapsulate the data packets as they themselves do. Therefore, an additional function of the HA is now to modify data packets in the uplink and downlink in such a way, that the route optimization remains transparent to the CN, while the MN thinks that it exchanges data packets directly with the CN, instead of still through the HA.

Accordingly, the data packets are to be changed by the HA as discussed before in relation to Fig. 4. That is in summary, data packets arriving from the MN are adapted by changing the source address to the HoA of the MN and by deleting the H.A.O., so that the same header is used in data packets exchanged between the HA and the CN as if no route optimization would have been carried out by the MN. Correspondingly, data packets incoming from the CN are extended by a R.H.O. comprising the MN's HoA, and the packets are re-addressed for the CoA of the MN instead of for the MN's HoA. Thereby, the MN is fooled to believe that the CN has participated in the RO procedure, and that the CN now transmits data packets directly to the MN, and not via the MN's HA anymore.

According to another embodiment of the invention, the MN 102 is located in a Wireless Local Network Area, wherein the WLAN interworks with 3GPP systems. The interworking 3GPP-WLAN will be referred to in the following as I-WLAN. It is especially important to reduce the data traffic in wireless networks, as only a limited bandwidth is available therein. Nevertheless, as may be easily appreciated by a skilled reader it is also possible to implement the principles of the various embodiments of the invention in network architectures that are different from the subsequent WLAN scenario.

Fig. 8 depicts a simplified overview of the I-WLAN architecture, wherein the Packet Data Gateway (PDG) 103 supports WLAN 3GPP IP access to External IP network. In addition, the WLAN includes WLAN access points and intermediate AAA (authentication, authorization and accounting) elements. It may further include other devices such as routers. The WLAN capable MN comprises all equipment that is in possession of an end user, such as a computer, WLAN radio interface adapter etc. A MN attached to the WLAN may either access directly the Internet (referred to as direct IP access) or may connect to its 3GPP operator and use operator's services. Since the operator normally wants to keep control of the MN's traffic, it is usual that the MN accesses the data services over the 3GPP operator, i.e. through the PDG.

When a mobile node attaches to a WLAN, the MN configures a local IP address (MN_{LA}) in the WLAN network, and establishes an IPsec tunnel to the PDG using the configured MN_{LA}. This MN_{LA} is not used for communication with correspondent nodes, rather this is the address that the MN uses only in the WLAN network and for communication with the PDG. After the MN establishes the IPsec tunnel (security association, etc.) with the PDG , the MN configures a remote IP address based on the PDG's IP prefix. Said remote IP address is used as new CoA of the MN when the MN communicates with the HA. Afterwards, the MN needs to perform MIP procedures to register the CoA (remote IP address from PDG's network) with its HA. Only in doing so, the MN can continue using its original Home IP Address, which has been used to start the service in the 3GPP network before the handover to the WLAN network.Therefore, the MN sends/receives data packets to/from the CN over the established MIPv6 tunnel between itself and its HA. In case of I-WLAN, the HA may be implemented in the SAE (System Architecture Evolution) anchor.

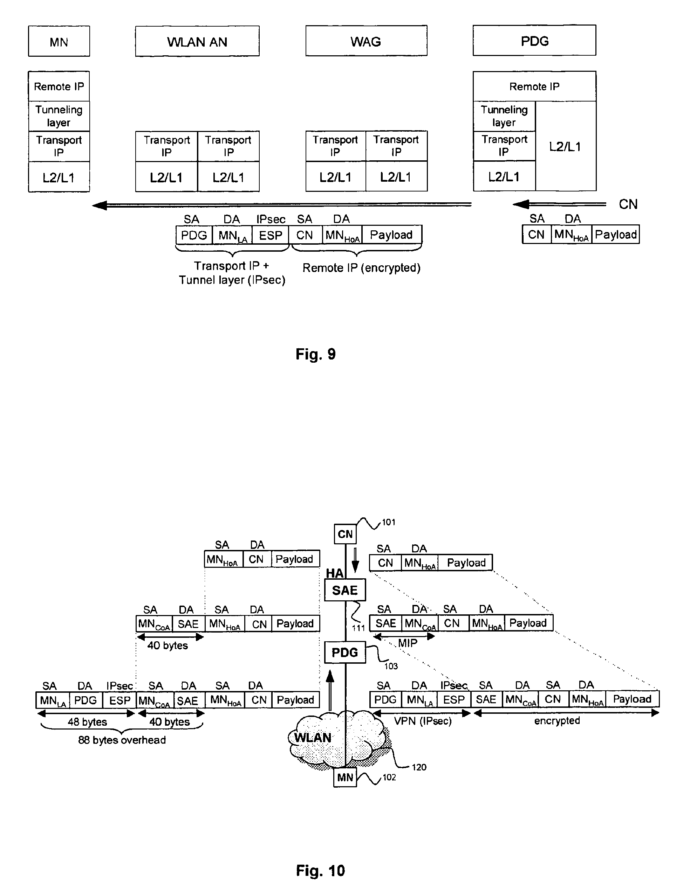

Fig. 9 illustrates the protocol stack of the I-WLAN architecture. In this respect, Fig. 9 also shows WLAN Access Network (AN) and WLAN Access Gateway (WAG), which however are not important for the invention, and will thus not be further discussed. The remote IP layer of the MN is used by the MN to be addressed in the external packet data networks, wherein the MN's remote IP address is utilized for communication with an external entity. At the bottom of Fig. 9 a data packet transmitted from the CN is depicted on its way to the MN, wherein the header formats are illustrated in detail. As apparent, the PDG processes the remote IP packets without modifying them, however, the Tunneling layer encapsulates the remote IP packet within a tunneling header, which allows end-to-end tunneling between the MN and the PDG. Further, the transport IP layer allows the intermediate entities/network and the WLAN access network to transport the remote IP layer packets, wherein the MN is addressed in this layer by its local IP address. The tunneling layer together with the transport layer may be implemented by the IPsec protocol in tunnel mode.

Generally, IPsec provides security services at the IP layer for other protocols and applications in order for them to communicate securely. That is, IPsec sets up a secure path between two communicating nodes over insecure intermediate systems. In this respect, IPsec is composed of several components to provide security service, wherein the two main ones are the Authentication Header (AH) protocol and the Encapsulating Security Payload (ESP) protocol. They provide authenticity and privacy to IP data by adding particular headers to the IP data packet.

Referring to Fig. 9 again, the original data packets are encapsulated within an IPsec header, with the MN's local address (MN_{LA}) as the destination address, the PDG's address as the source address, and including the Encapsulating Security Payload (ESP, 8 bytes in length) within a corresponding option field. The payload of the new encapsulated packet, i.e. the original data packet, is encrypted. Furthermore, the ESP provides origin authenticity, integrity and confidentiality of the data packets, while the packet overhead added by the IPsec tunnel sums up to 48 bytes.

Though the following embodiment of the invention is restricted to a 3GPP-WLAN architecture, other access technologies in the MN's network are possible, and the mechanism of the invention may be appropriately applied thereto, as well. For instance, the MN and the CN may both be connected to the same type of network which may be a 3GPP network (see Fig. 4 and 7)Other access technologies that are possible is for example the WIMAX (**W**orldwide **I**nteroperability for **M**icrowave **Acc**ess).

Fig. 10 shows a communication system, in which the mobile node is located in a Wireless Local Area Network (WLANs) 120, wherein a packet data gateway (PDG) 103 enables the MN 102 to access external IP networks from the WLAN. As discussed above, it is further assumed that an IPsec tunnel is utilized for security purposes between the PDG 103 and the MN 102. In detail, all data packets and signaling messages exchanged between the MN and the PDG are flowing over this IPsec tunnel.

Usual communication between the CN and the MN is depicted in the downlink and uplink with detailed illustrations of the employed headers of the exchanged data packets. In particular, referring to the downlink from the CN, the original data packet contains an IP header, wherein the CN's address is the source address and the MN's Home Address is used as destination address. Accordingly, the data packet is routed to the HA which is in this case integrated as a function in one particular SAE of the Home Network. However, it should be noted that the HA could be a separate entity in the Home Network, as well, or implemented in a different entity. In the following the terms HA and SAEa are utilized interchangeably, as the HA is assumed to be implemented as a function within the SAE anchor.

In compliance with the general MIPv6 procedure, the HA encapsulates the original data packet from the CN as payload with an additional IP header, comprising its own address as the source address, and the Care-of Address of the MN as the destination address. This IP-in-IP encapsulation adds another 40 bytes to the data packet. Since the MN's CoA is based on the PDG's IP prefix, the data packet arrives at the PDG 103, which provides access to the WLAN 120 to which the MN 102 is connected. As the PDG 103 is one end of the IPsec tunnel, the PDG encapsulates the received data packet from the HA within an IPsec header construct and encrypts the payload, which actually now is the entire received data packet. More specifically, the IPsec header generated by the PDG comprises the PDG's address as the source address, the MN's local address as the destination address in the local network, and adds ESP in a corresponding field. This IPsec tunneling adds another 48 bytes to the packet, which together with IP-in-IP tunneling amounts to 88 bytes in total.

Correspondingly, data packets transmitted from the MN 102 are encapsulated threefold: the IPsec header, the IP-in-IP header and the usual IP header. Accordingly, the data packets are decapsulated on its way to the CN 101, namely, the IPsec header is stripped off at the PDG, as the PDG is the end of the IPsec tunnel. The PDG forwards the packets to the HA, wherein the IP-in-IP header is removed at the Home Agent, which then forwards the data packets in the direction of the CN.

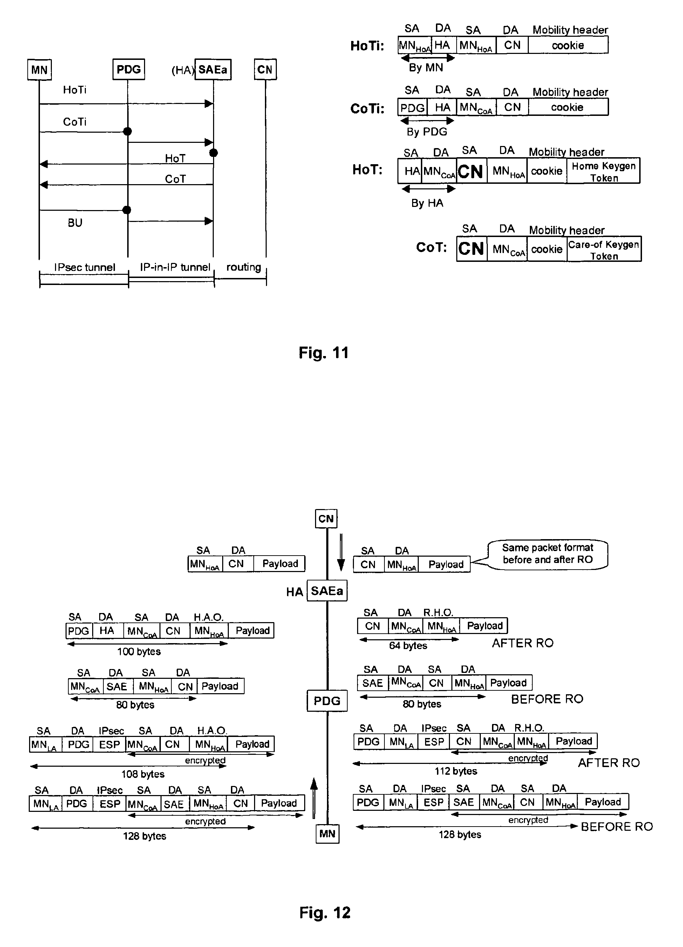

According to the embodiment of the invention illustrated in Fig. 11, the MN initiates the Route Optimization Procedure by generating the HoTi, CoTi messages. The IPsec headers are omitted from the message formats depicted at the right side of Fig. 11, as the IPsec encapsulation applies equally to all messages transmitted between the MN and the PDG. In detail, the HoTi message is transmitted over the IPsec tunnel and then over the MIP tunnel (IP-encapsulation is shown in Fig. 11) to the HA. The CoTi message is also transmitted over the IPsec tunnel to the PDG, because all data transmitted must go through the IPsec tunnel. Subsequently, because the CoTi message would usually be forwarded directly to the CN and not to the HA, the PDG has to be adapted to tunnel CoTi to the HA, which is implemented with the IP-in-IP encapsulation. In other words, the tunnel between the PDG and the SAEa (HA) is necessary because the CoTi's destination IP address is CN, and the packets otherwise would be routed to the CN.

In summary, the PDG must be adapted in the control/signaling plane so as to interceptCoTi and BU messages sent from the MN and destined to the CN. In this respect, the PDG monitors all packets coming from the nodes, to which it is connected. In case a data packet contains the Mobility Header (used for MIPv6), the PDG further inspects the data packet to determine whether it is a HoTi, CoTi or BU message. If this is the case, the PDG examines the source address of the data packet to determine which MN is sending the packet and derives the corresponding MN's SAE (HA) by comparing the source address with an internal database. Said internal database maintains a mapping of the MN with its corresponding HA, which is especially important in case the HA is a function of e.g. an SAE anchor, and several SAE anchors are connected to the PDG. Also, in case there are several SAE anchors connected to the PDG, the PDG may establish a tunnel to each SAE anchor, wherein this tunnels (e.g. IP-in-IP) might be preconfigured.

Futher, the HA shall be able to process both messages, HoTi and CoTi, on behalf of the CN, which implies additional functionality within the HA (or SAEa). For instance, in the control/signaling plane the SAEa needs to implement functions to inspect packets incoming from the MNs to determine whether the data packets contain a Mobility Header, and if they are HoTi, CoTi or BU messages. If this is the case, the SAEa (HA) intercepts said messages relating to the RO procedure. Additionally, the IP destination address of the HoTi, CoTi and BU messages is the CN's IP address. Consequently, the HA must accept and process packets, that are not destined to its own IP address. Furthermore, the decision of the HA whether to accept and process such packets may be made e.g. based on the packets source address. Thus, in order for the SAEa to accept the data packets, the source address shall indicate a mobile node that is already registered to the HA.

In addition, the SAEa (HA) implements some functionality of a normal MIPv6 capable correspondent node concerning the mechanisms underlying MIPv6's RO. That is, the HA is able to generate valid CoT and HoT messages, while using the CN's address, to which the HoTi/CoTi were destined, as the source address of the routing messages. After the SAE successfully prepares the two response messages to the received HoTi and CoTi messages, the HoT message is IP tunneled to the MN directly, which is standard procedure, and the CoT message is routed normally (without tunneling) to the MN, as the destination address is the MN's CoA. Then, the CoT and HoT traverse the IPsec tunnel from the PDG to the MN. The MN receives the routing messages, and thinks that they arrive from the CN, not knowing that the CN is not participating in the route optimization procedure.

Correspondingly, the MN prepares a binding update message and transmits same over the IPsec tunnel to the PDG. Again, it is necessary to intercept the BU message in the PDG, and to tunnel same to the HA instead. At the reception of the BU, the SAE anchor creates a binding entry for the MN and the CN, and thus starts modifying the IP header of the data packets, so that the whole route optimization procedure remains transparent to the CN, and the MN does not recognize that the CN did not take part in the RO procedure.

In particular, the data packets in the uplink, from the MN to the CN, must be adapted such that the performed route optimization procedure remains invisible to the CN, that is the packet format shall be the same as before the route optimization. Correspondingly, those data packets of the downlink, from the CN to the MN, have to be changed so as to represent packet formats according to a usual completed route optimization procedure between the MN and the CN.

Fig. 12 shows in detail the applied header formats of data packets exchanged between the MN and the CN after and before performing the route optimization procedure according to the embodiment of the invention. Concerning data packets transmitted from the CN and destined to the MN, the data packet header format at the beginning is a normal IP header, with the Home Address of the MN (MN_{HoA}) as the destination address. Indeed, the packet format between the HA and the CN remains the same in regard to the RO method. Subsequently, the data packet is received by the HA, and the HA changes the destination address to the MN's CoA. Furthermore, the HA introduces the HoA of the mobile node in the R.H.O. field. No IP-in-IP encapsulation is necessary anymore, thus the header size is reduced by 16 bytes compared to before the inventive RO procedure.

The data packets are routed to the PDG according to the destination address being the location-dependent MN's CoA. Then, the PDG receives the data packets and transmits them via the IPsec tunnel to the MN, which entails the encapsulation within an IPsec header with the local address of the MN as the new destination address.

Conversely, the data packets transmitted from the MN contain 2 headers at the beginning: the IPsec header and the route-optimized header, whereas previously, before conducting the RO according to the invention, three headers were necessary: the IPsec header and two times a normal IP header (see Fig. 12). As apparent from the Figure, this saves 20 bytes per data packet in the MN's WLAN network, that is, between the MN and the PDG. In other words, instead of applying another IP encapsulation in the HA, only a routing header option is inserted instead.

The IPsec header is stripped off at the PDG, and the decapsulated packet has then to be tunneled to the HA (SAEa), e.g. in IP-in-IP encapsulation, because otherwise the data packet would be routed to the CN as the destination address is the CN's IP address. Thus, between the PDG and the HA (SAEa) the header size is now 100 bytes (40 bytes + 40 bytes + 20 bytes), which results in an increase of 20 bytes compared to before the RO procedure was performed. However, this is adverse as the increased header is used in the core network, which usually has enough bandwidth to cope with the additional traffic. More important, the wireless link in the WLAN network between the PDG and the MN is bandwidth limited, which makes it exceedingly important to reduce the traffic on said link.

The HA needs to change the packet header of the received packet so that the packet header complies with the packet header the CN expects. This includes the exchange in the source address field of the MN's CoA with the MN's HoA, and the deletion of the H.A.O. Thus, the CN correctly receives the data without realizing that a route optimization procedure occurred.

In summary, by applying the route optimization according to the embodiment of the invention, it is possible to achieve a reduction of the data packets overhead. In the downlink, the MIPv6 inserted IP-in-IP tunnel is replaced by the Routing Header Option having only 24 bytes. Compared to the IP-in-IP overhead of 40 bytes this results in a 16 bytes save for the downlink channel. Accordingly, in the uplink the MIPv6 inserted IP-in-IP tunnel is replaced by the Home Address Option, which requires 20 bytes. Thus, the total overhead reduction amounts to 20 bytes. This results in the great advantage that the data traffic between the HA and the MN is reduced. This is especially advantageous over the air interface between the PDG and the MN, as usually the resources for transmitting data over the air are limited.

Moreover, no signaling for the route optimization is necessary in the CN's network, which reduces the data traffic therein. Further, though applying a route optimization procedure no change in the data path actually happens, because the HA intercepts all relevant messages, so that the CN is not aware of the route optimization. Therefore, all data still passes through the HA, which may be a requisition by certain services or operators.

Also, the data packets exchanged between the HA and the CN, remain the same in size, while a usual route optimization would yield in the inclusion of routing option fields, which increase the size of the data packets. However, as the RO according to the embodiment of the invention does not affect the CN, the data packets are not altered. Another advantage is that the location privacy of the MN is maintained, because the CN does not know the MN's CoA, which is eliminated from the data packets by the HA.

Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the present invention may also be implemented by means of software modules which are executed by a processor or directly in hardware. Also a combination of software modules and a hardware implementation may be possible. The software modules or instructions may be stored on any kind of computer readable storage media, for example RAM, EPROM, EEPROM, flash memory, registers, hard disks, CD-ROM, DVD, etc.

## Claims

1. A method for reducing the header size of data packets on a communication link between a mobile node and its home agent, wherein the data packets are exchanged between the mobile node and a corresponding node, wherein all the data packets are exchanged via the home agent, the method comprising the steps of:
transmitting by the mobile node data packets to the correspondent node by utilizing a route-optimized header,
transmitting by the correspondent node data packets to the mobile node by utilizing a non-route-optimized header,
converting by the home agent the route-optimized header of the data packets from the mobile node into the non-route-optimized header, utilized by the correspondent node,
converting by the home agent the non-route-optimized header of the data packets from the correspondent node into the route-optimized header, utilized by the mobile node.

2. The method of claim 1, further comprising the step of:
performing a route optimization procedure between the mobile node and the home agent, wherein the home agent participates in the route optimization procedure on behalf of the correspondent node, and
and wherein the steps of claim 1 are conducted after performing the route optimization procedure.

3. The method of claim 2, wherein the route optimization procedure between the mobile node and the home agent comprises the steps of:
exchanging authorisation messages between the mobile node and the home agent, wherein the authorisation messages, received by the home agent from the mobile node, are destined for the correspondent node, and
wherein the home agent utilizes an address of the correspondent node as a source address of the authorisation messages, transmitted to the mobile node.

4. The method of claim 3, wherein the step of exchanging authorisation messages comprises the steps of:
transmitting from the mobile node a first and second authorisation message destined for the correspondent node, wherein the first and second authorisation messages are intercepted by the home agent,
in response to the first and second authorisation message, transmitting from the home agent a third and fourth authorisation message to the mobile node,
wherein the address of the correspondent node is utilized as a source address of the third and fourth authorisation message.

5. The method of one of claims 2 to 4, wherein the route optimization procedure, comprises the step of:
transmitting a binding update message from the mobile node and destined for the correspondent node, for binding a location-dependent address of the mobile node with a location-independent address of the mobile node, wherein the binding update message is intercepted by the home agent.

6. The method of one of claims 1 to 5, wherein the mobile node is located in an access network and an access router in the access network provides connectivity to the access network for the mobile node, and
wherein the access router forwards messages of a route optimization procedure to the home agent, the messages being destined to the corresponding node, wherein the route optimization procedure is performed between the mobile node and the home agent, the home agent participating in the route optimization procedure on behalf of the correspondent node.

7. The method of claim 6, wherein the data packets are exchanged between the mobile node and the access router through a security tunnel.

8. The method of claim 7, wherein the access router removes an option field from the header of data packets received from the mobile node, before tunneling the data packets to the home agent.

9. The method of one of claims 6 to 8, wherein the access network is a wireless or a wired type of access network.

10. The method of one of claims 1-9,
wherein the non-route-optimized header of the data packets transmitted from the correspondent node, comprises an address of the correspondent node in a source address field, and a location-independent address of the mobile node in a destination address field, and
wherein the route-optimized header of the data packets transmitted from the mobile node comprises a location-dependent address of the mobile node in a source address field, the address of the correspondent node in a destination address field, and the location-independent address of the mobile node in a routing option field.

11. The method of claim 10, wherein the step of converting the route-optimized header of the data packets from the mobile node into the non-route-optimized header comprises the steps of:
exchanging the location-dependent address of the mobile node in the source address field with the location-independent address of the mobile node in the routing header field, and
deleting the routing header field.

12. The method of claims 10 or 11, wherein the step of converting the non-route-optimized header of the data packets from the correspondent node into the route-optimized header comprises the steps of:
including the location-independent address of the mobile node in the routing header field, and
exchanging the location-independent address of the mobile node in the destination address field with the location-dependent address of the mobile node.

13. The method of one of claims 1 to 12, wherein the mobile node is located in a first network area and the correspondent node is located in a second network area, wherein the first and the second network area use different access technologies.

14. The method of claims 2 and 13, wherein the route optimization procedure is started after the mobile node enters and connects to the first network area.

15. A network entity for reducing the header size of data packets, exchanged between a mobile node and a corresponding node, wherein all the data packets are exchanged via the network entity, comprising:
a receiver adapted to receive data packets incoming from the mobile node, wherein the data packets incoming from the mobile node comprise a route-optimized header,
the receiver is further adapted to receive data packets incoming from the correspondent node, wherein the data packets incoming from the correspondent node comprise a non-route-optimized header,
a processor adapted to convert the route-optimized header of the data packets, incoming from the mobile node, into the non-route-optimized header, and
the processor is further adapted to convert the non-route-optimized header of the data packets, incoming from the correspondent node, into the route-optimized header.

16. The network entity of claim 15, wherein the network entity is a home agent of the mobile node.

17. The network entity of claims 15 or 16, wherein the network entity performs a route optimization procedure with the mobile node on behalf of the correspondent node.

18. The network entity of claim 17, wherein
the receiver of the network entity is adapted to receive from the mobile node a first and second authorisation message, destined to the correspondent node, the processor is further adapted to generate, in response to the first and second authorisation message, a third and fourth authorisation message for the mobile node, wherein the processor utilizes an address of the correspondent node as source address of the third and fourth authorisation message, and
the transmitter is further adapted to transmit the third and fourth authorisation message to the mobile node.

19. The network entity of one of claims 15 to 18, wherein
the receiver is further adapted to receive from the mobile node a binding update message, destined to the correspondent node, and
the processor is further adapted to process the binding update message by initiating the conversion by the processor of the non-route-optimized headers of the data packets and the conversion of the route-optimized headers of the data packets.

20. The network entity of one of claims 15-19, wherein
the receiver is adapted to receive data packets from the mobile node, wherein the route-optimized header of the data packets from the mobile node comprises a location-dependent address of the mobile node in the source address field, an address of the correspondent node in the destination field, and a location-independent address of the mobile node in a routing header field,
the processor is adapted to exchange the location-dependent address of the mobile node in the source address field with the location-independent address of the mobile node in the routing header field,
the processor is further adapted to delete the routing header field, and
the transmitter is further adapted to transmit the data packets to the correspondent node, after having exchanged the location-dependent address with the location-independent address of the mobile node and after having deleted the routing header field.

21. The network entity of one of claims 15-20, wherein
the receiver is adapted to receive data packets from the correspondent node, wherein the non-route-optimized header of the data packets from the correspondent node comprises an address of the correspondent node in the source address field and a location-independent address of the mobile node in the destination address field,
the processor is adapted to include the location-independent address of the mobile node in the routing header field,
the processor is further adapted to exchange the location-dependent address of the mobile node in the destination address field with the location-dependent address of the mobile node, and
the transmitter is adapted to transmit the data packets to the mobile node, after having included the location-independent address and after having exchanged the location-dependent address of the mobile node.

22. The network entity of one of claims 15 to 21, further comprising means to perform or participate in the steps of the method according to one of the claims 1 to 14.

23. An access router in a network area to which a mobile node is connected for forwarding data packets received from the mobile node, the mobile node exchanging the data packets with a correspondent node via an home agent, wherein all the data packets are exchanged between the home agent and the mobile node via the access router, which comprises:
a processor adapted to determine whether a data packet incoming from the mobile node is related to a route optimization procedure, performed between the mobile node and the home agent, wherein the home agent participates in the route optimization procedure on behalf of the correspondent node, and
in case the processor determines that the data packet incoming from the mobile node is related to the route optimization procedure, a transmitter is adapted to transmit the data packet to the home agent.

24. The access router of claim 23, wherein a plurality of home agents are connected to the access router, which further comprises:
a database comprising information about an association of the mobile node with the home agent via which the data packets are exchanged with the correspondent node,
the processor is further adapted to determine for each data packet incoming from the mobile node the home agent via which the data packets are exchanged with the correspondent node, based on the database and on an address of the mobile node in a source address field of the data packet.

25. The access router of claims 23 or 24, comprising:
a receiver adapted to receive data packets from the mobile node, wherein
the processor removes an option field from the header of the data packets received from the mobile node, and
the transmitter is adapted to tunnel the processed data packets to the home agent.

26. The access router of one of claims 23 to 25, further comprising means to perform or participate in the steps of the method according to one of claims 1 to 14.

27. A mobile node which exchanges data packets with a correspondent node via an home agent, wherein the mobile node is located in a foreign network different to its home network, and is adapted to perform a route optimization procedure with the home agent upon changing to another foreign network, wherein the home agent participates in the route optimization procedure on behalf of the correspondent node.

28. The mobile node of claim 27, further comprising means to perform or participate in the steps of the method according to one of claims 1 to 14.

29. A communication system comprising a network entity according to one of claims 15 to 22, an access router according to one of claims 23 to 26 and a mobile node according to claims 27 or 28.
